# EUROPÄISCHE PATENTSCHRIFT

(11) **EP 0 981 278 B1**
(45) Veröffentlichungstag und Bekanntmachung des Hinweises auf die Patenterteilung: **25.09.2002**
(21) Anmeldenummer: 98918968.3
(22) Anmeldetag: 14.05.1998
(51) Int. Cl.: A21B 3/04, A21B 1/40

(54) **BACKVORRICHTUNG UND -VERFAHREN**
BAKING DEVICE AND METHOD
DISPOSITIF ET PROCEDE DE CUISSON AU FOUR

(30) Priorität: 17.05.1997 EP 97108093
(43) Veröffentlichungstag der Anmeldung: 01.03.2000
(73) Patentinhaber: Hofer, Wolfgang, 4040 Linz (AT)
(72) Erfinder: Hofer, Wolfgang, 4040 Linz (AT)
(74) Vertreter: Secklehner, Günter, Dr.
(86) Internationale Anmeldenummer: AT9800127
(87) Internationale Veröffentlichungsnummer: WO98052418

(56) Entgegenhaltungen:
- EP-A- 0 648 420
- EP-A- 0 653 900

## Beschreibung

Die Erfindung betrifft eine Vorrichtung zur Herstellung von Backwaren und ein Verfahren zum Garen und/oder Backen von Lebensmitteln oder Backwaren, wie sie in den Oberbegriffen der Ansprüche 1 und 10 beschrieben sind.

Es sind bereits Vorrichtungen zur Herstellung von Backwaren, insbesondere zum Garen und/oder Backen von Lebensmitteln oder Backwaren, sowie auch entsprechende Verfahren bekannt. So ist es aus der AT 401 707 B bekannt, die Temperaturen und die Luftfeuchtigkeit sowohl bei der Teigzubereitung als auch in der sogenannten Ruhselzeit zu definieren. Gleichermaßen wird auch die Hauptgare vor ihrem Ende abgebrochen. Dadurch soll eine frühzeitige Hautbildung im Bereich der Backwaren verhindert werden, um bei einem späteren Dampfausbruch, der beim Backen von zuvor tiefgefrorenen Backwaren auch zu einem relativ späten Zeitpunkt des Gar- bzw. Backvorgangs auftritt, ein Abplatzen dieser Haut im Bereich der Oberfläche der Backware zu verhindern. Betreffend die Behandlung der Backware während des Backens wird nur festgestellt, daß die Backware nach dem Auflegen auf das Backblech mit Wasser bespritzt und dann unter Verwendung von möglichst viel Dampf (Schwaden) gebacken werden soll, wobei sowohl Heißluftöfen als auch Öfen mit ruhender Luft verwendet werden können. Nachteilig ist hierbei, daß die frühe Hautbildung bei Backwaren während des zur endgültigen Fertigstellung derselben durchgeführten Backvorganges nicht sicher verzögert oder verhindert werden kann.

Die Aufgabe der vorliegenden Erfindung liegt darin, eine Vorrichtung der Eingangs genannten Art sowie ein Verfahren zum Garen und/oder Backen von Lebensmitteln oder Backwaren zu schaffen, mit dem der Gar- bzw. Backvorgang universell auf unterschiedliche Einsatzfälle angepaßt werden kann.

Diese Aufgabe der Erfindung wird durch die Merkmale im Anspruch 1 gelöst. Vorteilhaft ist hierbei, daß durch die laufende Überwachung eines Soll- und eines Ist- Wertes der Luftfeuchtigkeit und/oder der Temperatur im Backraum, ggf. bezogen auf die Gar- bzw. Backtemperatur und/oder der Gar- bzw. Backzeit, ein zu starkes Austrocknen oder eine zu hohe Luftfeuchtigkeit im Bereich der Oberfläche der Backwaren ebenso verhindert werden kann, wie eine unerwünschte oder zu späte Hautbildung im Bereich der Oberfläche von Backwaren. Darüberhinaus kann ein gleichmäßiges Gar- und Backergebnis bei den Lebensmitteln bzw. Backwaren erreicht werden.

Dadurch ist es auch einfach möglich, den Austritt von Wasserdampf bzw. anderen Bestandteilen aus den Lebensmitteln bzw. den Backwaren besser zu steuern und kann damit sowohl das Gar- bzw. Backergebnis, nämlich das Aussehen der Lebensmittel bzw. der Backware als auch der Haltbarkeit und der Frischezustand, insbesondere die Reschheit, über längere Zeit aufrecht erhalten werden. Ein weiterer Vorteil dieser Lösung liegt darin, daß nunmehr der jeweilige Feuchtigkeitsgehalt und die jeweilige Temperatur, der in den Backraum eingebrachten Lebensmittel bzw. Backwaren ohne einer zusätzlichen Behandlung, z.B. einem weiteren Meßvorgang oder dgl. konstant bleibt.

Durch die Weiterbildung nach Anspruch 2 kann der Ist-Wert der Feuchtigkeit und/ oder Temperatur zur Gänze bei dem nachfolgenden Gar- bzw. Backvorgang mitberücksichtigt werden und ist es dadurch auch möglich, den Temperaturverlauf und die Zeitdauer des Gar- bzw. Backvorganges hinsichtlich der erzielbaren Qualität einem Optimum, zwischen dem gewünschten Gar- bzw. Backergebnis und der Gar- bzw. Backzeit, universell anzupassen.

Vorteilhaft ist eine weitere Ausbildung nach Anspruch 3, da dadurch ein feinfühliger Regelungsvorgang der Temperatur im Backraum erzielbar ist. Damit kann die Differenz zwischen Soll- und Ist-Wert bzw. die Abweichung vom Soll-Wert der Temperatur und/oder der Luftfeuchtigkeit gering gehalten werden.

Durch die weitere Ausführungsvariante nach Anspruch 4 wird auch eine rasche Anpassung der Feuchtigkeitswerte an unterschiedliche Produktionszustände bzw. eine Anpassung an einen optimalen Gar- bzw. Backprozeß ermöglicht.

Vorteilhaft ist aber auch eine Ausbildung nach Anspruch 5, da damit eine sich über den gesamten Gar- bzw. Backvorgang hinziehende Überwachung möglich ist. Vor allem ist dadurch eine kontinuierlich fortlaufende Überwachung des gesamten Gar- bzw. Backvorganges erzielbar, wobei je nach der Gar- bzw. Backdauer und in Abhängigkeit von der Empfindlichkeit des zu garenden Lebensmittels bzw. der zu backenden Backware die Zeitdauer zwischen den einzelnen Ermittlungen des Ist-Wertes der Luftfeuchtigkeit und/oder Temperatur und/oder Zeitdauer und/oder der Ermittlung der Differenz universell an unterschiedliche Einsatzfälle angepaßt werden kann.

Durch die Weiterbildung nach Anspruch 6 ist es aber auch möglich, die Feststellung der Temperatur und/oder der Temperatur der Luftfeuchtigkeit und/oder der Luftfeuchtigkeit bzw. der Differenz zwischen diesen und den zugehörigen Soll-Werten in Abhängigkeit von der Zeitdauer des Gar- bzw. Backvorganges zu ermitteln.

Eine feinfühlige Überwachung, insbesondere aber Regelung des Gar- bzw. Backvorganges, wird durch die Ausgestaltung der Steuervorrichtung nach Anspruch 7 erzielt.

Durch die Auswahlmöglichkeiten beim Einbringen des Fluides nach Anspruch 8 wird mit Vorteil eine Anpassung an die gewünschte Veränderung der Luftfeuchtigkeit im Backraum ermöglicht.

Durch die Ausgestaltung nach Anspruch 9 wird eine gleichmäßige Luftfeuchtigkeit und/oder Temperatur über das gesamte Volumen des Backraums in einfacher Weise erzielt.

Die Aufgabe der Erfindung wird aber auch durch das Verfahren im Anspruch 10 gelöst. Vorteilhaft ist bei diesem Verfahren, daß durch die laufende Überwachung der Ist-Werte der Luftfeuchtigkeit und der Temperatur im Backraum und durch den ständigen Vergleich und die Differenzbildung mit den Soll-Werten eine universelle Anpassung des Gar- bzw. Backablaufes an ein günstiges Ergebnis des Gar- bzw. Backvorganges möglich ist.

Vorteilhaft sind auch die Maßnahmen nach Anspruch 11, da durch die Überwachung der Differenz der Soll- und Ist-Werte auch die Abweichung des Ist-Wertes vom Soll-Wert auf ein Minimum gehalten werden kann, sodaß äußere Bedingungen wie z.B. Leistungsschwankungen in der Energieversorgung in der Heizvorrichtung sowie unterschiedliche Beschickungsmengen des Backraums und selbstverständlich auch Unterschiede in der Feuchtigkeit und/oder Temperatur der zum Garen bzw. Backen eingebrachten Lebensmittel bzw. Backwaren in einfacher Weise vollautomatisch mitberücksichtigt werden, ohne daß es weiterer Arbeitsvorgänge bedarf.

Die Erfindung wird im nachfolgenden anhand eines in der Zeichnung dargestellten Ausführungsbeispieles näher erläutert.

Es zeigt:

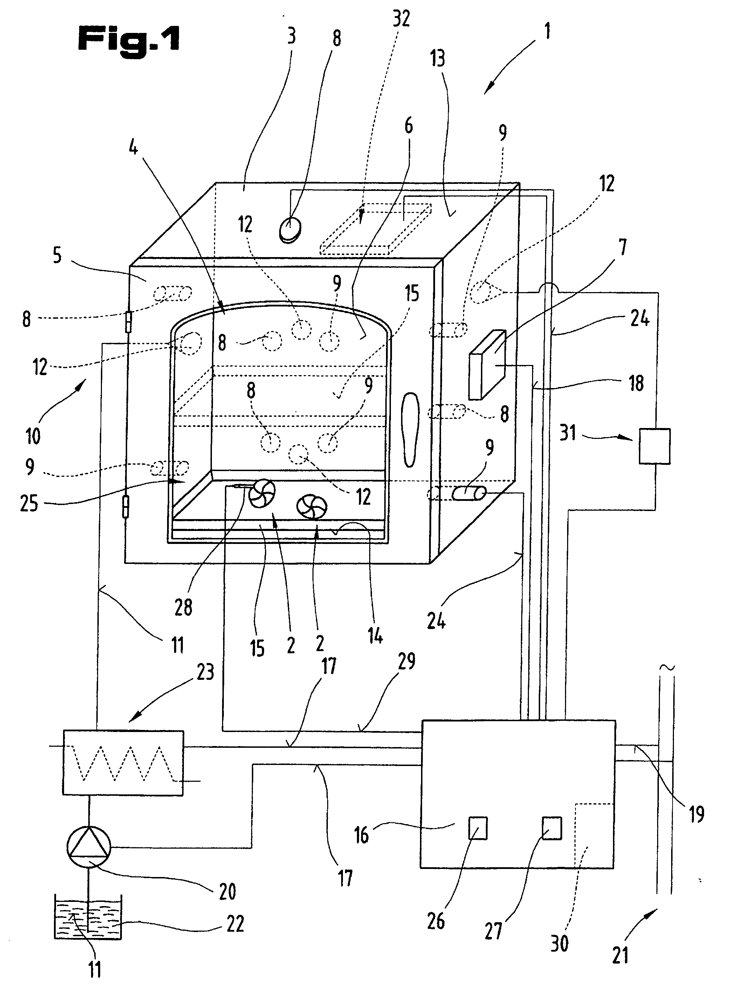

- Fig. 1: eine erfindungsgemäße Vorrichtung zum Herstellen von Backwaren in stark vereinfachter, schematischer Darstellung und Seitenansicht mit der zugehörigen Steuervorrichtung in Art eines Blockschaltbildes.

In Fig. 1 is eine Vorrichtung 1 zum Herstellen von schematisch angedeuteten Backwaren 2, z.B. Semmeln, Kipferln und dgl., dargestellt. Ein in einem Gehäuse 3 angeordneter Backraum 4 ist über eine Tür 5 von einer Frontseite her zugänglich, wobei die Tür 5 mit einer durchsichtigen Glasscheibe 6 zur Überwachung des Gar- bzw. Backvorganges ausgestattet ist.

Dem Backraum 4 ist eine Heizvorrichtung 7 zum Erwärmen des Backraumes 4 zugeordnet. Diese Heizvorrichtung 7 kann aus beliebigen, aus dem Stand der Technik bekannten, Ausbildungen oder Ausstattungen sein und mit den unterschiedlichsten Medien wie Gas, Strom, Öl oder Festbrennstoffen betrieben werden. Selbstverständlich sind als Heizvorrichtungen 7 auch andere Wärmeenergieerzeuger, wie Mikrowellen, Hochfrequenzanlagen usw. verwendbar bzw. kann die Energiezufuhr auch über Warmluft erfolgen.

Im Inneren des Backraumes 4 ist zumindest ein Meßwertgeber 8 zum Feststellen eines Ist-Wertes der Temperatur und zumindest ein weiterer Meßwertgeber 9 zur Feststellung des Ist-Wertes der Luftfeuchtigkeit im Backraum 4 angeordnet. Des weiteren ist dem Backraum 4 eine Zufuhrvorrichtung 10 für ein Fluid 11 zur Regulierung der Feuchtigkeit und/oder Temperatur im Backraum 4 zugeordnet. Diese Zufuhrvorrichtung 10 umfaßt zumindest ein im Backraum 4 angeordnetes Austragelement 12 für das Fluid 11.

Selbstverständlich können auch mehrere Austragelemente 12 vorgesehen sein, die über einen Innenraum oder eine innere Oberfläche des Backraumes 4 in beliebiger Anordnung verteilt vorgesehen sein können.

Unter anderem ist es auch möglich, das Fluid 11, insbesondere dann, wenn es in flüssiger Form eingebracht wird, in Aufnahmebehälter im Inneren des Backraumes 4 einzuleiten, sodaß es dort durch die im Backraum 4 vorherrschende Wärme in den gas- bzw. dampfförmigen Zustand übergeführt werden kann.

Vorteilhaft kann es sich erweisen, wenn die Austragelemente 12, bei welchen es sich z.B. um Sprühdüsen, Zerstäuber und dgl. handeln kann, über eine Deckplatte 13 des Backraumes 4 gleichmäßig verteilt angeordnet sind, da beim Einströmen des Fluides 11, unabhängig davon, ob im flüssigen, gas- oder dampfförmigen Zustand, durch den Temperaturunterschied des Dampfes gegenüber der Lufttemperatur im Backraum 4 dieser Dampf schwerer ist und daher in Richtung eines Bodens 14 des Backraumes 4 absinkt und somit über nahezu das gesamte Volumen des Backraumes 4 eine gleichmäßige Verteilung desselben erzielt wird.

Werden in einem Backraum 4 jedoch mehrere Backbleche 15 zur Aufnahme von Backwaren 2 eingesetzt, kann es sich als vorteilhaft erweisen, über den Umfang des Backraumes 4, zumindest über dessen Seitenwände und dessen Rückwand, jeweils im Bereich zwischen zwei Backblechen 15 gleichmäßig verteilt Austragelemente 12 für das Fluid 11 anzuordnen, um so jede Lage der Backwaren 2 mit entsprechender Feuchtigkeit zu versorgen bzw. die Feuchtigkeitszufuhr und Stabilisierung feinfühlig regeln zu können.

Dabei kann es sich auch als vorteilhaft erweisen, in jedem Zwischenraum Meßwertgeber 8 und 9 für den Ist-Wert der Temperatur bzw. Luftfeuchtigkeit anzuordnen, sodaß bei entsprechender Auslegung einer Steuervorrichtung 16 - wie noch später im Detail erläutert werden wird - die Soll-Werte der Temperatur und/oder Luftfeuchtigkeit jeweils unterschiedlich für jedes Backblech 15 festgelegt werden können.

Diese Steuervorrichtung 16 ist über Leitungen 17, 18, 19 mit einer Fördervorrichtung 20 für das Fluid 11 der Zufuhrvorrichtung 10 der Heizvorrichtung 7 und eine Energiequelle 21 verbunden.

Die Fördervorrichtung 20 kann das Fluid 11 aus einem Speicherbehälter 22 oder aus einem Leitungssystem entnehmen oder kann die Zufuhr des Fluides über ein von der Steuervorrichtung 16 beaufschlagtes Ventil vom Leitungssystem direkt aus erfolgen.

Zwischen der Fördervorrichtung 20 und dem Austragelement 12, oder an beliebiger anderer Stelle, ist es ebenso möglich, einen Dampferzeuger 23 anzuordnen, sodaß das Fluid 11 von einem flüssigen in einen dampfförmigen Zustand verbracht werden kann.

Selbstverständlich ist es aber auch möglich, neben Austragelementen 12 für das Fluid 11 in flüssiger Form auch solche zum Austragen des Fluids 11 in dampfförmigen Zustand anzuordnen, wobei über die Steuervorrichtung 16 die Fördervorrichtung 20 bzw. - wie durch die weitere Leitung 17 angedeutet - auch der Dampferzeuger 23 beaufschlagt werden können, um wahlweise das Fluid 11 in unterschiedlichen Aggregatzuständen z.B. in Schwaden von Dampf oder Wassernebel oder mikrofeinen Tropfen und/oder an unterschiedlichen Stellen des Backraums 4 einzubringen.

Über Leitungen 24 sind Meßwertgeber 8 für die Temperatur im Backraum 4 sowie Meßwertgeber 9 für die Feststellung der Luftfeuchtigkeit im Backraum 4 mit der Steuervorrichtung 16 verbunden.

Wie durch strichlierte Linien ersichtlich gemacht, können auch mehrere solcher Meßwertgeber 8, 9 und/oder Meßwertgeber 9 angeordnet sein, wobei die Anordnung und Aufteilung dieser Meßwertgeber 8, 9 im Rahmen des fachmännischen Könnens des auf diesem Gebiet tätigen Fachmanns erfolgen kann und keineswegs an die gezeigten Ausführungsbeispiele gebunden oder auf diese eingeschränkt ist. Wie schematisch durch strichlierte Linien angedeutet, können derartige Meßwertgeber 8, 9 auch in einem Zwischenraum 25 zwischen zwei Backblechen 15, z.B. über den Umfang oder einen Teilumfang des Backraums 4 verteilt, angeordnet sein.

Weiters kann die Steuervorrichtung 16 mit Eingabeorganen 26, 27 für einen Soll-Wert der Feuchtigkeit bzw. der Temperatur im Backraum 4 versehen sein. Selbstverständlich ist diese Darstellung der Eingabeorgane 26, 27 nur funktionell zu verstehen und können diese Eingabeorgane 26, 27 durch beliebige andere technische Mittel, z.B. Tastaturen bei Verwendung von entsprechenden Softwareelementen oder Rechnern bzw. Personalcomputern, für oder in Verbindung mit der Steuervorrichtung 16 gebildet sein.

Die Eingabe dieser Soll-Werte für die Feuchtigkeit und Temperatur kann in Abhängigkeit von der Dauer der Gar- bzw. Backzeit ebenso erfolgen, wie die Definition der Temperatur bei bestimmten Feuchtigkeitswerten oder umgekehrt bzw. kann die Festlegung der Temperatur aufgrund der abgelaufenen Gar- bzw. Backzeit in Verbindung mit der Feuchtigkeit oder die Verbindung aus der aufgelaufenen Gar- und Backzeit mit der Temperatur anhand des Soll-Wertes der Feuchtigkeit vorgegeben werden.

Mit der Vorrichtung 1 bzw. im Backraum 4 können die beliebigen Gar- und Backvorgänge vorgenommen werden und ist es somit möglich, Teiglinge für Backwaren 2, z.B. unmittelbar nach der Hauptgare oder der sogenannten Ruhselzeit, in den Backraum 4 einzubringen oder entsprechend tiefgefrorene oder vorgefrorene Backwaren, die als Teigling oder bereits vorgebacken eingefroren worden sind, zu verarbeiten.

Es kann sich z.B. bei der Verwendung von vorgefrorenen oder gefrorenen Teiglingen als vorteilhaft erweisen, in eine der Backwaren 2 eine schematisch dargestellte Sonde 28 einzuführen, die über eine Leitung 29 ebenfalls mit der Steuervorrichtung 16 verbunden sein kann, um im Inneren der Backware 2 die Temperatur und/oder die Feuchtigkeit fortlaufend zu ermitteln und diese so ermittelten Ist-Werte in die Berechnung der Soll-Werte für die Temperatur und Luftfeuchtigkeit im Backraum 4 zu verwenden.

Das Verfahren zum Garen bzw. Backen von Lebensmitteln bzw. Backwaren 2 kann nun z.B. wie folgt ablaufen:

Die Backwaren 2 werden je nach dem gewünschten Herstellungsvorgang mit oder ohne Vorbehandlung z.B. unmittelbar nach der Ruhselzeit oder in gefrorenem oder gekühltem Zustand auf ein Backblech 15 aufgelegt. Dieses Backblech 15 wird nach dem Öffnen der Tür 5 in den Backraum 4 eingebracht, insbesondere auf den entsprechenden Führungsschienen eingeschoben. Je nach dem durchzuführenden Gar- bzw. Backvorgang kann der Backraum 4, z.B. bereits auf eine gewünschte Temperatur vorgewärmt und die Luft im Innenraum des Backraums 4 auf einen gewünschten Soll-Wert der Luftfeuchtigkeit eingestellt sein. Die Vorwärmung des Backraums 4 bzw. die Vorwahl der entsprechenden Luftfeuchtigkeit im Innenraum des Backraums 4 kann ebenso über die Steuervorrichtung 16 erfolgen, wobei diese Werte in entsprechenden Arbeitsprogrammen, die auf unterschiedlichste, aus dem Stand der Technik bekannte Formen, in der Steuervorrichtung 16 hinterlegt, erfolgen können.

Je nach dem eingestellten oder ausgewählten Gar- bzw. Backprogramm wird der Ist-Wert der Temperatur und/oder der Feuchtigkeit im Backraum 4 laufend mit den Meßwertgebern 8, 9 überwacht und werden diese Daten entweder kontinuierlich, z.B. in Echtzeit oder intermitterierend in gewissen Zeitabständen oder jeweils nach Ablauf einer gewissen Zeitdauer der Garzeit oder beim Erreichen gewisser vorgewählter Temperaturstufen an die Steuervorrichtung 16 weitergeleitet. Selbstverständlich können die Zeitpunkte, zu welchem der Ist-Wert der Luftfeuchtigkeit und der Ist-Wert der Temperatur ermittelt werden, gegeneinander versetzt sein.

Zur Überwachung der Backzeit weist die Steuervorrichtung 16 einen Zeitgeber 30 auf. Dieser kann auch zur Definition der Abfrage der Ist-Werte verwendet werden, die zuvor in Abhängigkeit von der Temperatur, der Dauer des Gar- bzw. Backvorganges anhand der mit den Eingabeorganen 26, 27 festgelegten Soll-Werte der Temperatur und Feuchtigkeit, definiert werden. Diese Definitionen und Soll-Werte können selbstverständlich auch in entsprechende Computerprogramme integriert sein oder durch Dateneingabe in Speicherfeldern vordefiniert sein und werden - je nach dem Programmablauf - kontinuierlich mit den ständig einlangenden Ist-Werten der Temperatur und Feuchtigkeit verglichen.

Stellt die Steuervorrichtung 16 eine Abweichung des Ist-Wertes der Feuchtigkeit vom Soll-Wert fest, so wird z.B. durch Zufuhr von trockener Luft oder durch Entzug von Feuchtigkeit der Ist-Wert der Feuchtigkeit auf den Soll-Wert abgesenkt, bzw. bei zu niederer Feuchtigkeit im Backraum 4 durch Zufuhr von Fluid 11 in flüssiger, gasförmiger oder dampfförmiger Form der Feuchtigkeitsgehalt soweit erhöht, daß der Ist-Wert wieder mit dem Soll-Wert übereinstimmt.

Um hierbei gleichzeitig eine Konstanthaltung der Temperatur, einen Temperaturabstieg oder eine Temperaturreduktion im Backraum 4 zu erreichen, kann das Fluid 11 in den unterschiedlichsten Zuständen, wie z.B. als Flüssigkeit in den unterschiedlichsten Temperaturen, z.B. gekühlt als Dampf oder als Heißdampf oder überhitzter Dampf, eingeleitet werden, um die Temperatur gleichzeitig mit der Feuchtigkeitszunahme gleichzuhalten, abzusenken oder zu erhöhen.

Gleichzeitig oder auch unabhängig davon ist es möglich, die Temperatur entsprechend zu überwachen und bei Abweichungen des Ist-Wertes vom Soll-Wert über die Zufuhrvorrichtung 10, 31 oder über eine eigene Zufuhrvorrichtung 31 entweder kühle, gekühlte oder tiefgekühlte Luft zuzuführen, um die Temperatur abzusenken und z.B. auch Heißdampf oder Naßdampf einströmen zu lassen, um die Temperatur - zusätzlich zu der ohnehin vorhandenen Heizvorrichtung 7 - schlagartig zu erhöhen. Die Temperaturregelung kann über die Zufuhrvorrichtungen 10, 31, aber auch durch Austausch der Luft im Inneren des Backraums 4 oder durch Wärmeaustausch erfolgen. Auch bei einem Regelmechanismus für die Anpassung an den Soll-Wert ist es möglich, diesen einheitlich für den gesamten Backraum 4 zu gestalten oder abwechselnd einzeln den Backblechen 15 oder einzelnen Bereichen des Backraums 4 geeignete Organe und Mittel zuzuordnen, die eine bereichsweise Anpassung der Temperatur an die Ist-Werte ermöglicht.

So ist es beispielsweise möglich, für die Anpassung oder Einhaltung des Soll-Wertes der Temperatur und/oder der Luftfeuchtigkeit sogenannte Schwadenbildner einzusetzen, die die Verteilung von Dampfschwaden, Heiß- oder Naßdampf im Backraum 4 bewirken.

Einer der Vorteile des vorliegenden Verfahrens liegt darin, daß durch Verwendung dieser Steuervorrichtung in der beschriebenen Art ein universeller Einsatz eines Backraumes 4 für unterschiedliche Gar- und Backzwecke und andere Verfahren wie z.B, braten, rösten, dünsten, auftauen und dgl. verwendet werden kann. Durch die Möglichkeit des Vollautomatik-Betriebes bzw. einen "Selbstlernbetrieb" braucht bei der Beschickung des Backraumes 4 nicht mehr auf die Temperatur und/oder die Feuchtigkeit bzw. die Temperatur der Feuchtigkeit und die Menge Rücksicht genommen zu werden. Zum Beispiel können die Ist-Werte der Temperatur und/oder Feuchtigkeit der Lebensmittel bzw. der Backwaren 2 zusätzlich mit einer oder mehreren Sonden 28 festgestellt werden und muß bei der Regelung der Steuervorrichtung 16 auf unterschiedliche Backmengen, Temperaturen und Feuchtigkeiten der Lebensmittel bzw. Backwaren 2 im Backraum 4 keine Rücksicht genommen werden.

Durch diese selbsttätige Regelungsautomatik wird bei dem bevorzugt kontinuierlich fortlaufenden Ermitteln der Differenz zwischen dem Soll- und Ist-Wert der Temperatur und/oder der Feuchtigkeit des Gar- bzw. Backvorganges beim Zuführen von unterschiedlichen Mengen oder Volumen von Lebensmitteln und/oder Backwaren 2, bevorzugt vor allem auch dann, wenn diese unterschiedlichen Feuchtigkeiten und/ oder Temperaturen aufweisen, ein optimaler Garund/oder Backvorgang von der Steuervorrichtung 16 - anhand der festgestellten Ist-Werte - von Feuchtigkeit und/ oder Temperatur ausgewählt. Damit kann unabhängig von einer Bedienungsperson ein optimales Back- und Garergebnis, auch bei verschiedenen Betriebszuständen, erzielt werden, ohne daß sich manuelle Einstellfehler nachteilig auswirken oder eine Fülle von abgestuften Programmen benötigt wird, die auf die jeweils unterschiedlich vorstellbaren Mengen und/oder Temperaturen an Backgut und/oder Feuchtigkeit des Backgutes abgestimmt sind. Dadurch verringert sich der Erstellungsaufwand für die Programme und somit auch der Wartungsaufwand und können Bedienungsfehler ausgeschlossen werden.

Damit können die Gar- bzw. Backprogramme auf eine maximale Auslastung des Backraumes 4 abgestimmt sein und wird beim Behandeln von Mindermengen im Backraum 4 der Programmablauf vollautomatisch - hinsichtlich der Temperatur und Feuchtigkeit - optimiert, sodaß unabhängig von der Beschickungsmenge ein gleichbleibendes Gar- bzw. Backergebnis erzielt wird.

Selbstverständlich ist die beschriebene Vorrichtung bzw. das Verfahren auch für alle anderen Vorgänge wie Braten, Dämpfen, Dünsten und/oder Auftauen von Lebensmitteln oder Backwaren 2 verwendbar.

Die beschriebene Vorrichtung und das Verfahren können dahingehend ergänzt werden, daß ein Mikrowellenerzeuger 32 in Verbindung mit der Vorrichtung 1 angeordnet wird, der es ermöglicht, den Backraum bzw. die darin befindlichen Lebensmittel oder Backwaren über Mikrowellen zu erhitzen. Vor allem in Verbindung mit der Behandlung von gefrorenen Lebensmitteln oder Backwaren 2 ist es dadurch möglich, zu Beginn der Behandlung, d.h. der Erwärmung, gleichzeitig und/oder vorauseilend und/oder nach einer gewissen Einwirkzeit der Wärme auf die Lebensmittel oder die Backwaren 2, den Innenbereich der Lebensmittel oder der Backwaren 2 über die Mikrowelle zu erwärmen.

Durch diese Erwärmung des Mittelbereiches kann der dabei entstehende Wasserdampf noch leichter durch die Oberfläche, ohne Abheben der Oberflächenschichten, austreten und wird ein ungehindertes Aufgehen der Mittelbereiche der Lebensmittel und Backwaren 2 ermöglicht, sodaß das Fertiggaren bzw. Fertigbacken über das gesamte Volumen der Lebensmittel oder Backwaren 2 in etwa gleichmäßig erfolgen kann.

Weiters ist es im Rahmen der Erfindung selbstverständlich auch möglich, das erfindungsgemäße Verfahren auch mit anderen aus dem Stand der Technik bekannten Verfahren durchzuführen.

### Bezugszeichenaufstellung

- 1: Vorrichtung
- 2: Backware
- 3: Gehäuse
- 4: Backraum
- 5: Tür

- 6: Glasscheibe
- 7: Heizvorrichtung
- 8: Meßwertgeber
- 9: Meßwertgeber
- 10: Zufuhrvorrichtung

- 11: Fluid
- 12: Austragelement
- 13: Deckplatte
- 14: Boden
- 15: Backblech

- 16: Steuervorrichtung
- 17: Leitung
- 18: Leitung
- 19: Leitung
- 20: Fördervorrichtung

- 21: Energiequelle
- 22: Speicherbehälter
- 23: Dampferzeuger
- 24: Leitung
- 25: Zwischenraum

- 26: Eingabeorgan
- 27: Eingabeorgan
- 28: Sonde
- 29: Leitung
- 30: Zeitgeber

- 31: Zufuhrvorrichtung
- 32: Mikrowellenerzeuger

## Patentansprüche

1. Vorrichtung (1) zum Garen und/oder Backen von Lebensmittel oder Backwaren (2) mit einem Backraum (4) mit einer Heizvorrichtung (7) für den Backraum (4), mit einer Zufuhrvorrichtung (10) für ein Fluid (11) mit zumindest einem im Backraum (4) angeordneten Austragelement (12) und mit zumindest einem Meßwertgeber (8), zumindest zum Erfassen eines Ist-Wertes einer Temperatur im Backraum (4) und mit einer Steuervorrichtung (16), die mit der Heizvorrichtung (7), dem Meßwertgeber (8) sowie der Zufuhrvorrichtung (10) und einer Energiequelle (21) verbunden ist, wobei im Backraum (4) zumindest ein weiterer mit der Steuervorrichtung (16) verbundener Meßwertgeber (8, 9) für die Ermittlung eines Ist-Wertes der Luftfeuchtigkeit angeordnet ist, **dadurch gekennzeichnet, daß** die Steuervorrichtung (16) mit einem Eingabeorgan (26, 27) für einen Soll-Wert der Luftfeuchtigkeit und/oder der Temperatur gegebenenfalls in Abhängigkeit von einer mit einem Zeitgeber (30) festlegbaren Back- bzw. Gardauer verbunden ist und daß die Zufuhrvorrichtung (10,31) für die Zu- und Abfuhr von Feuchtigkeit ausgebildet ist.

2. Vorrichtung nach Anspruch 1, **dadurch gekennzeichnet, daß** beim Auftreten einer Differenz zwischen dem Soll- und Ist-Wert der Luftfeuchtigkeit und/ oder dem Soll- und Ist-Wert der Temperatur und/oder der jeweiligen Gar- bzw. Backzeit die Luftfeuchtigkeit und/oder die Temperatur im Backraum (4) durch Zu- oder Abfuhr von Feuchtigkeit und/oder Wärme mit der Zufuhrvorrichtung (10, 31) und/oder auf den Soll-Wert rückführbar ist.

3. Vorrichtung nach Anspruch 1 oder 2, **dadurch gekennzeichnet, daß** bei einem Überschreiten der Soll-Temperatur im Backraum (4) die Zufuhrvorrichtung (10, 31) über die Steuervorrichtung (16) für die Zufuhr von Fluid (11) und/oder Kühlluft zum Backraum (4) beaufschlagt ist.

4. Vorrichtung nach einem oder mehreren der vorhergehenden Ansprüche, **dadurch gekennzeichnet, daß** bei einem Überschreiten des Soll-Wertes der Luftfeuchtigkeit im Backraum (4) die Zufuhrvorrichtung (10, 31) zum Entziehen von Feuchtigkeit oder zur Zufuhr von trockener Frischluft beaufschlagt ist.

5. Vorrichtung nach einem oder mehreren der vorhergehenden Ansprüche, **dadurch gekennzeichnet, daß** die Steuervorrichtung (16) die Differenz zwischen den Soll- und Ist-Werten der Luftfeuchtigkeit und/oder Temperatur im Backraum (4) bevorzugt intermittierend ermittelt.

6. Vorrichtung nach einem oder mehreren der vorhergehenden Ansprüche, **dadurch gekennzeichnet, daß** die Differenz zwischen dem Soll- und Ist-Wert der Temperatur und/oder der Luftfeuchtigkeit nach zumindest einer voreinstellbaren Dauer der Gar- und/oder Backzeit und/oder bei voreinstellbaren Werten der Temperatur im Backraum (4) feststellbar ist.

7. Vorrichtung nach einem oder mehreren der vorhergehenden Ansprüche, **dadurch gekennzeichnet, daß** die Steuervorrichtung (16) einen bevorzugt programmierbaren Rechner umfaßt, der zumindest ein Speicherelement zum Hinterlegen von zumindest einem Soll-Wert für die Luftfeuchtigkeit und/oder die Temperatur und/ oder die Gar- bzw. Backzeit aufweist.

8. Vorrichtung nach einem oder mehreren der vorhergehenden Ansprüche, **dadurch gekennzeichnet, daß** das Fluid (11) im flüssigen und/oder gas- und/oder dampfförmigen Zustand, insbesondere als Wasserdampf, in den Backraum (4), bevorzugt unter Überdruck, einbringbar und/oder einblasbar ist.

9. Vorrichtung nach einem oder mehreren der vorhergehenden Ansprüche, **dadurch gekennzeichnet, daß** die Austragelemente (12) für das Fluid (11) über die dem Backraum (4) zugewandte Oberfläche, insbesondere über die Deckplatte (13) verteilt angeordnet sind.

10. Verfahren zum Garen und/oder Backen von Lebensmitteln oder Backwaren (2) in einem Backraum (4) mit einer Vorrichtung (1) insbesondere nach einem oder mehreren der vorhergehenden Ansprüche, bei dem die insbesondere zuvor tiefgefrorenen Lebensmittel und/oder Backwaren (2) zum Garen bzw. Backen oder Vorgaren bzw. Vorbacken erwärmt und dabei einer voreinstellbaren Luftfeuchtigkeit ausgesetzt werden, **dadurch gekennzeichnet, daß** Soll-Werte für die Temperatur und/oder Luftfeuchtigkeit gegebenenfalls in Abhängigkeit von der Gar- bzw. Backzeit vordefiniert werden und danach während des Garens und Backens der Lebensmittel oder Backwaren (2) die jeweiligen Ist-Werte der Luftfeuchtigkeit und/oder der Temperatur gegebenenfalls in Abhängigkeit von der Gar- bzw. Backzeit ermittelt werden, wobei bei Feststellung eines Ist-Wertes für die Temperatur und/oder die Luftfeuchtigkeit, der kleiner ist als der entsprechende Soll-Wert, die Anpassung and die Soll-Werte mit Dampf erfolgt, der in der Vorrichtung selbst erzeugt wird.

11. Verfahren nach Anspruch 10, **dadurch gekennzeichnet, daß** die Luftfeuchtigkeit durch Feuchtigkeitszufuhr oder -entzug sowie die Temperatur der Backwaren durch Wärmezufuhr oder -entzug auf den Soll-Wert rückgeführt wird.

## Claims

1. Device (1) for fermenting and/or baking foodstuffs or bakery ware (2) comprising an oven (4) with a heating device (7) for the oven (4), having an intake system (10) for a fluid (11) with at least one outlet element (12) disposed in the oven (4) and at least one sensor (8) for detecting at least an actual value of a temperature in the oven (4) and having a control system (16) connected to the heating device (7), the sensor (8), the intake system (10) and an energy source (21), at least one other sensor (8, 9) being provided in the oven (4) and connected to the control system (16) for detecting an actual value of the air humidity, **characterised in that** the control system (16) is connected to an input element (26, 27) for entering a desired value of the air humidity and/or temperature, optionally depending on a baking time and fermentation time, settable by means of a timer (30) and **in that** the intake system (10, 31) is designed for introducing and removing moisture.

2. Device as claimed in claim 1, **characterised in that**, when a difference occurs between the desired and actual value of the air humidity and/or the desired and actual value of the temperature and/or the respective fermentation and baking time, the air humidity and/or the temperature in the oven (4) can be restored to the desired value by introducing or removing moisture and/or heat by means of the intake system (10, 31)

3. Device as claimed in claim 1 or 2, **characterised in that**, if the desired temperature in the oven (4) is exceeded, the control system (16) delivers fluid (11) and/or cool air via the intake system (10, 31) to the oven (4).

4. Device as claimed in one or more of the preceding claims, **characterised in that** if the desired value for the air humidity in the oven (4) is exceeded, moisture is extracted or dry fresh air is introduced via the intake system (10, 31).

5. Device as claimed in one or more of the preceding claims, **characterised in that** the control system (16) detects the difference between the desired and actual values of the air humidity and/or temperature in the oven (4), preferably on an intermittent basis.

6. Device as claimed in one or more of the preceding claims, **characterised in that** the difference between the desired and actual value of the temperature and/or the air humidity can be detected after at least a pre-settable period of the fermentation and/or baking time and/or at pre-settable values of the temperature in the oven (4).

7. Device as claimed in one or more of the preceding claims, **characterised in that** the control system (16) has a preferably programmable computer with at least one memory unit for storing at least one desired value for the air humidity and/or the temperature and/or the fermentation and baking time.

8. Device as claimed in one or more of the preceding claims, **characterised in that** the fluid (11) can be introduced and/or blasted into the oven (4), preferably above atmospheric pressure, in the liquid and/or gaseous and/or vapour state, in particular as steam.

9. Device as claimed in one or more of the preceding claims, **characterised in that** the outlet elements (12) for the fluid (11) are distributed around the surface directed towards the oven (4), in particular around the cover plate (13).

10. Method of fermenting and/or baking foodstuffs or bakery ware (2) in an oven (4) having a device (1) as claimed in particular in one or more of the preceding claims, whereby the foodstuffs and/or bakery ware (2), preferably deep-frozen beforehand, are heated and simultaneously exposed to a pre-settable air humidity for fermentation and baking or for prefermentation and pre-baking purposes, **characterised in that** desired values are pre-set for the temperature and/or air humidity, optionally depending on the baking and fermentation time, after which the respective actual values of the air humidity and/or the temperature are detected whilst the foodstuffs or bakery ware (2) are fermenting and baking, optionally depending on the fermentation and baking time, and if the actual value of the detected temperature and/or air humidity is lower than the corresponding desired value, steam is generated in the device itself to adjust to the desired values.

11. Method as claimed in claim 10, **characterised in that** the air humidity and the temperature of the bakery ware are restored to the desired values by introducing or removing moisture and by introducing or discharging heat.

## Revendications

1. Dispositif (1) pour rôtir et/ou cuire des aliments ou pâtisseries (2) dans une enceinte de cuisson (4) avec un dispositif de chauffage (7) pour l'enceinte de cuisson (4), avec un dispositif d'amenée (10) pour un fluide (11) avec au moins un élément d'évacuation (12) disposé dans l'enceinte de cuisson (4) et avec au moins un capteur de mesure (8), pour détecter au moins une valeur réelle d'une température dans l'enceinte de cuisson (4), et avec un dispositif de commande (16) qui est relié au dispositif de chauffage (7), au capteur de mesure (8) et au dispositif d'amenée (10) et à une source d'énergie (21), où est disposé dans l'enceinte de cuisson (4) au moins un autre capteur de mesure (8, 9) relié au dispositif de commande (16), pour la détermination de la valeur réelle de l'humidité d'air, **caractérisé en ce que** le dispositif de commande (16) est relié à un organe d'entrée (26, 27) pour une valeur de consigne de l'humidité d'air et/ou de la température le cas échéant en fonction d'une durée de cuisson respectivement de rôtissage pouvant être fixée avec une horloge (30), et **en ce que** le dispositif d'amenée (10, 31) est réalisé pour l'amenée et l'évacuation de l'humidité.

2. Dispositif selon la revendication 1, **caractérisé en ce que** lors de la survenue d'une différence entre les valeurs de consigne et réelle de l'humidité d'air et/ou les valeurs de consigne et réelle de la température et/ou de la durée de cuisson respectivement de rôtissage respective, l'humidité d'air et/ou la température dans l'enceinte de cuisson (4) peut être ramenée par une amenée respectivement évacuation d'humidité et/ou de chaleur avec le dispositif d'amenée (10, 31) à la valeur de consigne.

3. Dispositif selon la revendication 1 ou 2, **caractérisé en ce que** lors d'un dépassement de la température de consigne dans l'enceinte de cuisson (4), le dispositif d'amenée (10, 31) est sollicité par le dispositif de commande (16) en vue de l'amenée de fluide (11) et/ou d'air de refroidissement à l'enceinte de cuisson (4).

4. Dispositif selon l'une ou plusieurs des revendications précédentes, **caractérisé en ce que** lors d'un dépassement de la valeur de consigne de l'humidité d'air dans l'enceinte de cuisson (4), le dispositif d'amenée (10, 31) est sollicité en vue d'un retrait d'humidité ou d'une amenée d'air frais sec.

5. Dispositif selon l'une ou plusieurs des revendications précédentes, **caractérisé en ce que** le dispositif de commande (16) détermine de préférence par intermittence la différence entre les valeurs de consigne et réelle de l'humidité d'air et/ou de la température dans l'enceinte de cuisson (4).

6. Dispositif selon l'une ou plusieurs des revendications précédentes, **caractérisé en ce que** la différence entre les valeurs de consigne et réelle de la température et/ou de l'humidité d'air peut être déterminée après au moins une durée préréglable du temps de rôtissage et/ou de cuisson et/ou à des valeurs préréglables de la température dans l'enceinte de cuisson (4).

7. Dispositif selon l'une ou plusieurs des revendications précédentes, **caractérisé en ce que** le dispositif de commande (16) comporte un calculateur de préférence programmable qui présente au moins un élément de stockage pour stocker au moins une valeur de consigne de l'humidité d'air et/ou de la température et/ou du temps de rôtissage respectivement de cuisson.

8. Dispositif selon l'une ou plusieurs des revendications précédentes, **caractérisé en ce que** le fluide (11) peut être introduit et/ou insufflé, de préférence sous surpression, à l'état liquide et/ou gazeux et/ou en forme de vapeur, notamment comme vapeur d'eau, dans l'enceinte de cuisson (4).

9. Dispositif selon l'une ou plusieurs des revendications précédentes, **caractérisé en ce que** les éléments d'évacuation (12) du fluide (11) sont répartis sur la surface orientée vers l'enceinte de cuisson (4), notamment sur la plaque de recouvrement (13).

10. Procédé pour rôtir et/ou cuire des aliments ou des pâtisseries (2) dans une enceinte de cuisson (4) avec un dispositif (1) notamment selon l'une ou plusieurs des revendications précédentes, où les aliments et/ou pâtisseries (2) notamment congelés avant sont chauffés en vue du rôtissage respectivement de la cuisson ou du rôtissage préalable respectivement de la cuisson préalable et, ce faisant, sont exposés à une humidité d'air préréglable, **caractérisé en ce que** les valeurs de consigne de la température et/ou de l'humidité d'air sont prédéfinies le cas échéant en fonction de la durée de rôtissage respectivement de cuisson et qu'ensuite, pendant le rôtissage et la cuisson des aliments ou pâtisseries (2), les valeurs réelles respectives de l'humidité d'air et/ou de la température sont déterminées le cas échéant en fonction du temps de rôtissage respectivement de cuisson, où lors d'une constatation d'une valeur réelle de la température et/ou de l'humidité d'air, qui est plus petite que la valeur de consigne correspondante, l'adaptation aux valeurs de consigne a lieu avec de la vapeur qui est produite dans le dispositif lui-même.

11. Procédé selon la revendication 10, **caractérisé en ce que** l'humidité d'air est ramené par une amenée d'humidité ou un retrait de celle-ci ainsi que la température des pâtisseries par amenée de chaleur et retrait de celle-ci à la valeur de consigne.
